# EUROPEAN PATENT SPECIFICATION

(11) **EP 3 401 978 B1**
(45) Date of publication and mention of the grant of the patent: **08.06.2022**
(21) Application number: 17170039.6
(22) Date of filing: 09.05.2017
(51) Int. Cl.: H01M 50/449, H01M 50/46, H01M 4/133, H01M 10/0525

(54) **METHOD FOR PRODUCING AN ELECTRODE ASSEMBLY FOR A BATTERY CELL**
VERFAHREN ZUR HERSTELLUNG EINER ELEKTRODENANORDNUNG FÜR EINE BATTERIEZELLE
PROCÉDÉ DE FABRICATION D'UN ENSEMBLE D'ÉLECTRODE POUR UN ÉLÉMENT DE BATTERIE

(43) Date of publication of application: 14.11.2018
(73) Proprietor: Robert Bosch GmbH, 70442 Stuttgart (DE); GS Yuasa International Ltd., Kisshoin, Minami-ku, Kyoto-shi, Kyoto 601-8520 (JP)
(72) Inventor: Scherner, Martin, 96132 Schluesselfeld (DE); Proell, Johannes, 96052 Bamberg (DE); Thomann, David, 96194 Erlau (DE); Ringk, Andreas, 34593 Berndshausen (DE)
(74) Representative: Isarpatent

(56) References cited:
- WO-A1-2013/160932
- WO-A1-2015/022226
- WO-A1-2016/136550
- JP-A- 2013 178 951
- JP-A- 2016 038 995
- Seiji Katayama: "Laser joining of metal and plastic - Industrial Laser Solutions", , 11 January 2010 (2010-01-11), XP055389422, Retrieved from the Internet: URL:http://www.industrial-lasers.com/artic les/print/volume-250/issue-6/features/lase r-joining-of-metal-and-plastic.html [retrieved on 2017-07-10]

## Description

The invention relates to a method for producing an electrode assembly for a battery cell, in particular for a lithium ion battery cell, comprising an anode foil, a first separator foil, a cathode foil and a second separator foil.

Electrical energy can be stored by means of batteries. Batteries change chemical energy into electrical energy. Particularly, rechargeable batteries are known that can be charged and discharged several times. Batteries or battery modules comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

Electrode assemblies have a positive electrode called cathode and a negative electrode called anode. The anode and the cathode are separated from one another by means of a separator. The electrodes of the battery cell can be formed like foils and wound with interposition of the separator to form an electrode roll, also referred to as jelly-roll. Alternatively, the electrodes can be layered with interposition of the separator to form an electrode stack. The foils of the anode, the cathode and the separator are joined for example by lamination techniques using rolling.

The electrodes and the separator are impregnated by an electrolyte that is normally in liquid state, gel state or in solid state. The electrodes of the electrode assemblies are connected to the terminals of the battery cell. The battery cell can be charged and discharged via the terminals.

Both, the cathode and the anode, comprise a current collector on which a composite material containing an active material, a binder and/or a conductive agent, e.g. carbon black, is applied. The current collector of the cathode is typically made of aluminium and the current collector of the anode is typically made of copper. The cathode composite material contains, for example, a metal oxide as active material. The anode composite material contains, for example, graphite or silicon as active material. In the active material of the anode lithium ions are intercalated.

In a charging process of the battery cell, lithium ions are migrating from the cathode to the anode through the separator while simultaneously electrons flow in an external circuit from the cathode to the anode. In a discharge process, the lithium ions move within the battery cell from the anode to the cathode and electrons flow in the external circuit from the anode to the cathode.

Document DE 10 2009 022 678 A1 discloses an electrode assembly with a separator. The separator is formed as a composite material containing ceramic and polymer materials. In particular, the separator comprises a base layer formed of an organic material coated with an inorganic material. The electrode assembly is shaped as a jelly roll.

Document US 2014/248541 A1 discloses a solid electrolyte for a lithium battery comprising at least one zone made of lithiated glass-ceramic material. Thereat, a part of a lithiated ceramic material is irradiated by a laser beam in order to achieve melting of the lithiated ceramic material and to obtain a vitreous phase after solidification.

Moreover, WO 2015/022226 A1 describes a thermal fixing of stacked or folded electrochemical energy storage means, wherein a separator, a first electrode layer and a second electrode layer are stacked and a laser beam is directed on the stacked layers.

### Disclosure of the Invention

The invention provides a method for producing an electrode assembly for a battery cell as described in appended claim 1.

Thereat, the anode foil comprises an anode current collector that is sandwiched between two anode layers which contain an anode composite material. The anode current collector is electrically conductive and is made of a metal, in particular of copper. The cathode foil comprises a cathode current collector that is sandwiched between two cathode layers which contain a cathode composite material. The cathode current collector is electrically conductive and is made of a metal, in particular of aluminium.

According to an advantageous embodiment of the invention, the laser beam is directed onto the first separator foil such that energy of the laser beam largely penetrates the first separator foil and such that the anode composite material of the anode foil largely absorbs the energy of the laser beam. By absorbing said energy of the laser beam, the temperature of the anode composite material is rising.

Preferably, the anode composite material contains graphite as anode active material. Thereat, the anode composite material may contain further materials, for example a conductive agent and a binder.

According to an advantageous development of the invention, the first separator foil contains a polymer layer that is placed facing the anode foil. Hence, the polymer layer of the first separator foil is placed adjacent to and in direct contact with the anode composite material.

According to a preferred embodiment of the invention, the energy of the laser beam is applied such that the anode composite material is heated to a temperature below a melting point or below a decomposition temperature of the anode composite material and above or near to a melting point or a softening point of the polymer layer of the first separator foil. In particular, the anode composite material is heated to a temperature below a melting point or below a decomposition temperature of the anode active material.

Hence, heat is transferred from the anode composite material towards the polymer layer of the first separator foil. Thereupon, the polymer layer of the first separator foil is melting or softening partly and material of the polymer layer is flowing into or adapted or to micro pores of the anode composite material. When the anode composite material and the polymer layer are cooling down, the material of the polymer layer is solidified and hence, the first separator foil is joined to the anode foil by welding.

Advantageously, the first separator foil contains a ceramic layer that is placed averted from the anode foil. Hence, the ceramic layer of the first separator foil is placed facing the cathode foil.

Further preferably, the tubular member rotates about the central axis to which the tubular member is rotationally symmetric.

According to a preferred development of the invention, the second separator foil is joined to the cathode foil and/or to the first separator foil, in particular, after the first separator foil has been welded to the first anode foil. The second separator foil is preferably designed like the first separator foil and hence contains a polymer layer and a ceramic layer. Thereat, the second separator foil is arranged such that the ceramic layer of the second separator foil is facing the cathode composite material of the cathode foil.

Preferably, the second separator foil is joined to the cathode foil and/or to the first separator foil by dint of an adhesive compound. The adhesive compound can be glue or any possible other material able to form a join via two ceramic coated separators. But any other joining techniques are also feasible.

Advantageously, the anode foil, the first separator foil, the cathode foil and the second separator foil are merged as to form an electrode tape. Thereat, said the electrode tape is cut to electrode sub-stacks.

Afterwards, a plurality of electrode sub-stacks are placed on top of each other as to form an electrode assembly shaped as an electrode stack. Furthermore, anode taps protruding from the anode current collectors are connected electrically and cathode taps protruding from the cathode current collectors are connected electrically.

### Advantages of the Invention

The method for producing an electrode assembly according to the invention allows joining the anode foil to the separator foil easily and quickly without adding additional material. Hence, lithium ion diffusion rate is raised compared to electrode assemblies in which an anode foil is fixed, for example by gluing, needling, sewing or welding to a separator foil. Dissolution of additional glue material into the electrolyte may impact onto long-term cycling performance of the battery cell. Furthermore, mechanically fixed electrode sub-stacks are produced that can be stacked to form an electrode assembly as an electrode stack. In particular, upside down alignment and transportation of the electrode sub-stacks is possible. It is sufficient to weld the separator foil to the anode foil in edge areas of the later electrode sub-stacks. It is not necessary to weld the separator foil to the anode foil large-scaled over their whole surface. In particular, when using a tubular member rotating about a central axis for pressing the separator foil against the anode foil, the method according to the invention can be executed continuously and quickly.

### Brief Description of the Drawings

For a better understanding of the aforementioned embodiments of the invention as well as additional embodiments thereof, reference should be made to the description of embodiments below, in conjunction with the appended drawings showing:
- Figure 1: a schematic view at a battery cell, which is not comprised by the present invention,
- Figure 2: a sectional view at a an anode foil and a separator foil which are not comprised by the present invention while welding,
- Figure 3: an augmented view from figure 2,
- Figure 4: a schematic view at a welding process, which is not comprised by the present invention,
- Figure 5: a schematic view at a welding process according to an embodiment of the present invention,
- Figure 6: a sectional view at an electrode tape which is not comprised by the present invention and
- Figure 7: a semi transparent view at an electrode sub-stack which is not comprised by the present invention.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

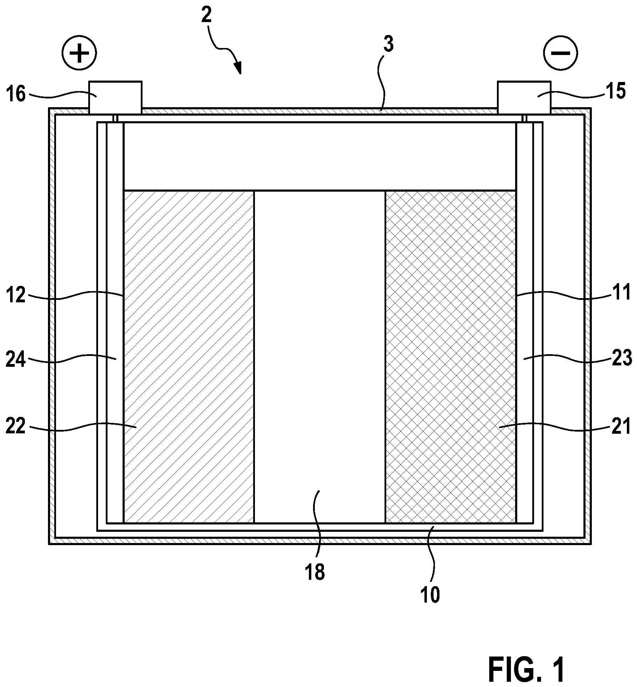

Figure 1 shows a schematic view at a battery cell 2 which is not comprised by the present invention. The battery cell 2 contains a housing 3 which is for example of pouch type and which has a prismatic shape. The battery cell 2 further contains an electrode assembly 10, which is arranged within the housing 3. The housing 3 is a bag or a pouch made of a soft material that surrounds the electrode assembly 10.

Furthermore, the battery cell 2 contains a negative terminal 15 and a positive terminal 16. The terminals 15, 16 serve for charging and discharging the battery cell 2. The terminals 15, 16 protrude from the housing 3.

The electrode assembly 10 contains an anode 11, a cathode 12 and a separator 18 that is arranged between the anode 11 and the cathode 12. Presently, the electrode assembly 10 is shaped as an electrode stack. That means the anode 11 and the cathode 12 of the electrode assembly 10 consist of several flat sheets that are stacked alternately to form a pile or a stack. The separator 18 also consists of several flat sheets that are stacked between the sheets of the anode 11 and the sheets of the cathode 12.

The anode 11 contains an anode composite material 21 and an anode current collector 23. The anode composite material 21 and the anode current collector 23 are attached to one another. The anode current collector 23 is electrically conductive and is made of a metal, in particular of copper. The anode current collector 23 is electrically connected to the negative terminal 15 of the battery cell 2. The anode composite material 21 presently contains graphite as active material.

The cathode 12 contains a cathode composite material 22 and a cathode current collector 24. The cathode composite material 22 and the cathode current collector 24 are attached to one another. The cathode current collector 24 is electrically conductive and is made of a metal, in particular of aluminium. The cathode current collector 24 is electrically connected to the positive terminal 16 of the battery cell 2. The cathode composite material 22 presently contains metal oxide as active material.

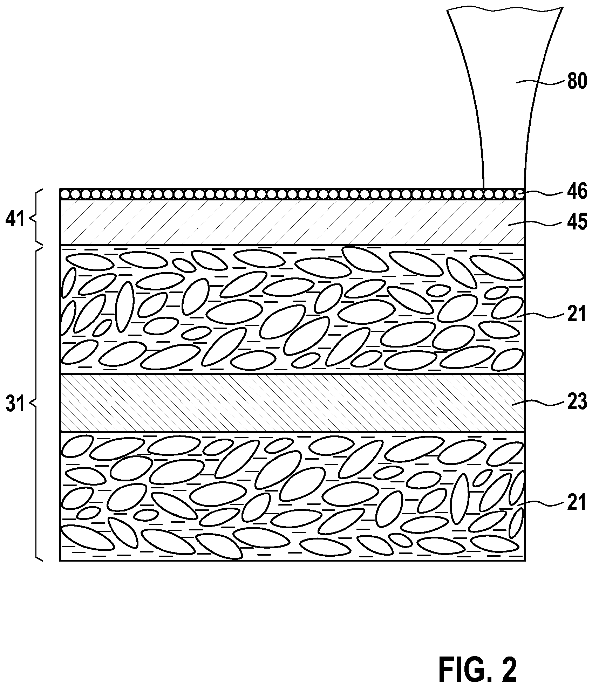

Figure 2 shows a sectional view at an anode foil 31 and a first separator foil 41 which are not comprised by the present invention while welding by dint of a laser beam 80. A laser source 82 that is not shown here emits the laser beam 80. Thereat, the laser beam 80 is directed to the first separator foil 41. The wavelength of the laser beam 80 is about 0,5 - 2 µm, in particular 0,9 - 1,07 µm. The power of the laser beam 80 is about 1 - 20000 W, in particular 10 - 4000 W, especially 100 - 500 W.

The anode foil 31 comprises an anode current collector 23 that is sandwiched between two anode layers which contain the anode composite material 21. The anode current collector 23 is electrically conductive and is made of copper. The thickness of the anode current collector 23 is about 9 - 12 µm. The anode composite material 21 is porous and contains graphite particles as anode active material, a conductive agent and a binder. The thickness of the anode foil 31 is about 20 - 1000 µm, in particular 50 - 300 µm.

The first separator foil 41 contains a polymer layer 45 that is placed facing the anode foil 31. Thereat, the polymer layer 45 is placed adjacent to and in direct contact with the anode composite material 21. The thickness of the polymer layer 45 is about 9 - 16 µm. The first separator foil 41 also contains a ceramic layer 46 that is placed averted from the anode foil 31. The thickness of the ceramic layer 46 is about 1 - 5 µm.

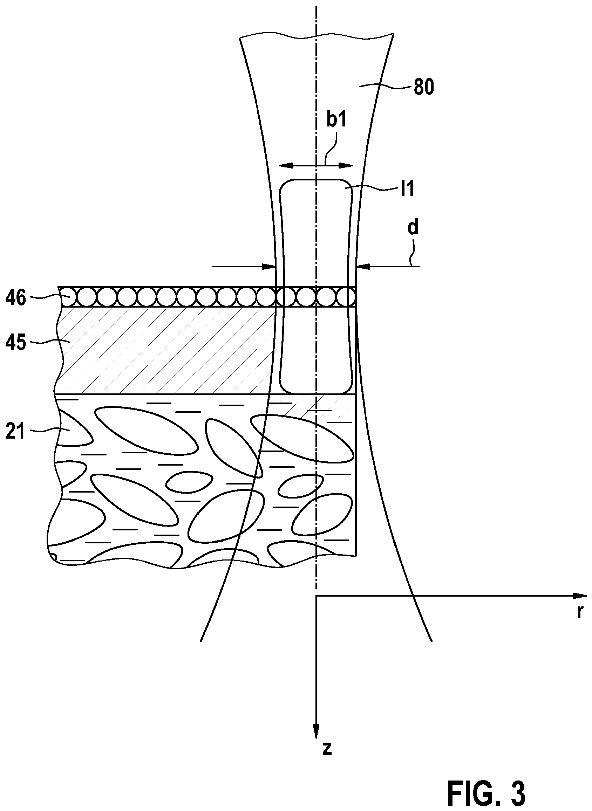

Figure 3 shows an augmented view from figure 2. The laser beam 80 propagates into a propagation direction z which is oriented orthogonal to the surface of the first separator foil 41. The laser beam 80 is directed onto the first separator foil 41 such that energy of the laser beam 80 largely penetrates the first separator foil 41 and that the anode composite material 21 of the anode foil 31 largely absorbs the energy of the laser beam 80. The polymer layer 45 and the ceramic layer 46 are transparent for the laser beam 80.

A direction orthogonal to the propagation direction z is called radial direction r. In said radial direction r, the laser beam 80 has a varying diameter d. Close to the surface of the first separator foil 41 the diameter d of the laser beam 80 is about 1 to 3000 µm, in particular 300 - 600 µm.

In figure 3, an isophote I1 is shown. The extension b1 in radial direction r of said isophote I1 is smaller than the diameter d of the laser beam 80. The isophote I1 shown here holds, for example, an energy content of about 63% of the energy of the laser beam 80. Also, welding by using the process window within other isophotes is possible, for example with an energy content of 87% of the Gaussian laser beam intensity distribution.

By absorbing the energy of the laser beam 80, the temperature of the anode composite material 21 is rising. The energy of the laser beam 80 is applied such that the anode composite material 21 is heated to a temperature below a melting point or below a decomposition temperature of the anode composite material 21 and above or near to a melting point or a softening point of the polymer layer 45 of the first separator foil 41. Thereat, heat is transferred from the anode composite material 21 towards the polymer layer 45 of the first separator foil 41.

Thereupon, the polymer layer 45 of the first separator foil 41 is melting or softening partly and material of the polymer layer 45 is flowing into or adapted to micro pores of the anode composite material 21. When the anode composite material 21 and the polymer layer 45 are cooled down, the material of the polymer layer 45 is solidified. Hence, the first separator foil 41 is welded to the anode foil 31.

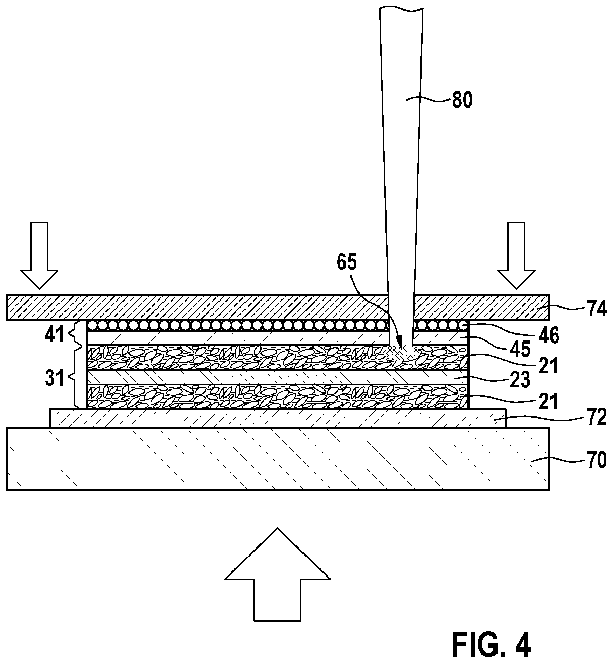

Figure 4 shows a schematic view at a welding process, which is not comprised by the present invention. The anode foil 31 is placed on a steel plate 72 which is placed on a table 70, for example a lifting table. Other plate materials are also possible. A glass pane 74 is pressed onto the first separator foil 41 and towards the table 70 as indicated by arrows. The glass pane 74 is transparent for the laser beam 80.

Hence, the first separator foil 41 is pressed against the anode foil 31 by dint of the glass pane 74 while the first separator foil 41 is welded to the anode foil 31. Thereat, the laser beam 80 penetrates the first separator foil 41 and the glass pane 74. The energy of the laser beam 80 generates a welding area 65 in a border zone of the anode composite material 21.

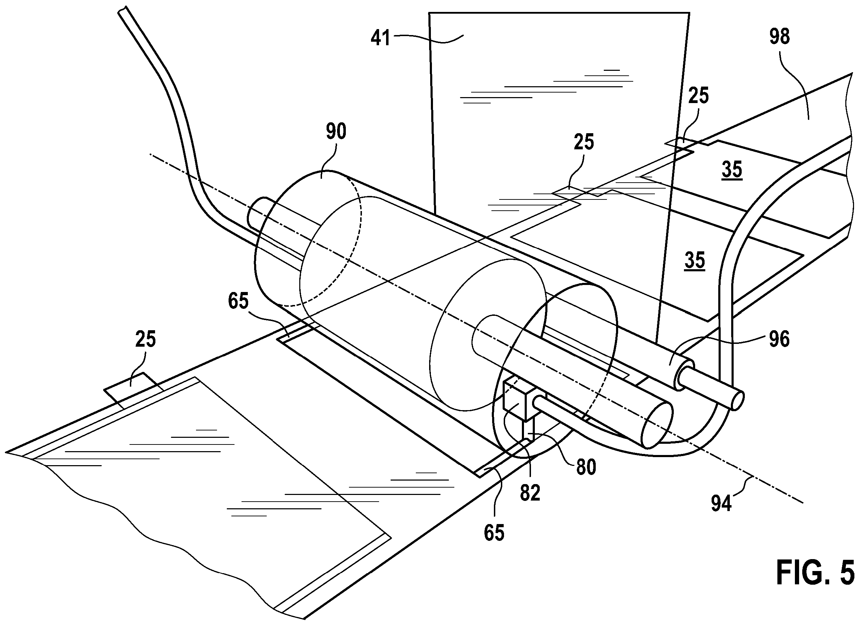

Figure 5 shows a schematic view at a welding process according to an embodiment of the present invention. The first separator foil 41 is fed as a long tape. The anode foil 31 is pre-cut into single anode elements 35 that are placed on a transport belt 98. The first separator foil 41 is placed on the anode elements 35 by dint of a roller 96. Anode taps 25 protrude from the anode current collectors 23 of the anode elements 35.

The first separator foil 41 is pressed against the anode elements 35 by dint of a tubular member 90. The tubular member 90 is transparent for the laser beam 80 and rotationally symmetric to a central axis 94. During welding operation, the tubular member 90 rotates about the central axis 94.

A laser source 82 that emits the laser beam 80 is placed inside the tubular member 90. The laser source 82 is arranged such that the laser beam 80 is directed to an edge area of the first separator foil 41. Another laser source 82, that is not visible here, is arranged inside the tubular member 90 such that the laser beam 80 emitted by said laser source 82 is directed to an opposite edge area of the first separator foil 41. Both laser beams 80 generate welding areas 65 on opposite edge areas of the first separator foil 41.

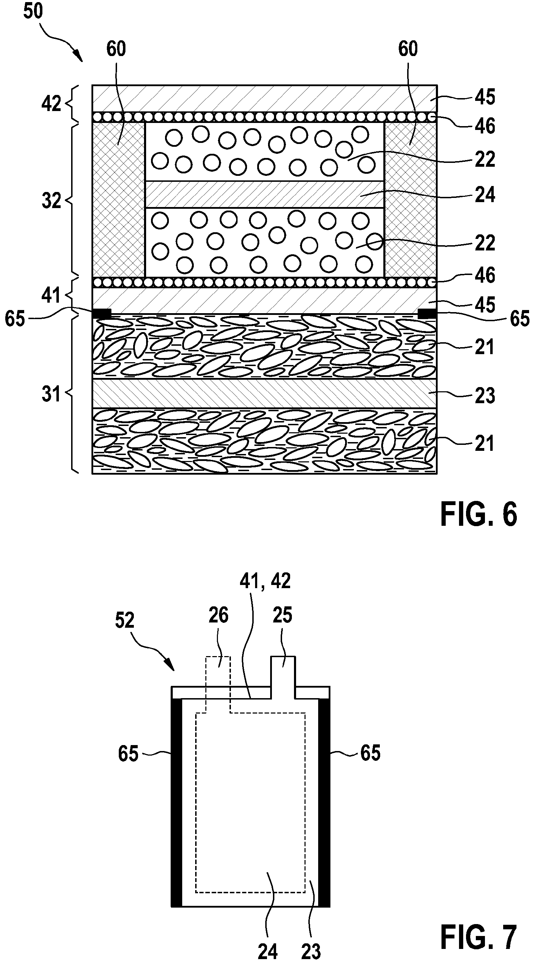

Figure 6 shows a sectional view at an electrode tape 50, which is not comprised by the present invention. The electrode tape 50 comprises the first separator foil 41 which is welded to the anode foil 31 as described above. The electrode tape 50 further comprises a cathode foil 32 which comprises a cathode current collector 24 that is sandwiched between two cathode layers which contain a cathode composite material 22. The cathode current collector 24 is electrically conductive and is made of aluminium. The electrode tape 50 also comprises a second separator foil 42 that contains a polymer layer 45 and a ceramic layer 46.

After the first separator foil 41 is welded to the anode foil 31 by dint of the laser beam 80, the cathode foil 32 is placed on the first separator foil 41. An adhesive compound 60 is applied on edge areas of the first separator foil 41. The second separator foil 42 is then placed on the cathode foil 32. Hence, the second separator foil 42 is joined to the first separator foil 41 by dint of said adhesive compound 60. Thus, the cathode foil 32 is fastened between the separator foils 41, 42. The adhesive compound 60 can be glue or any other material having adhesive properties. Alternatively, also any other joining technique can be used. The second separator foil 42 is placed such that the ceramic layer 46 faces the cathode foil 32. Also the first separator foil 41 is placed such that the ceramic layer 46 faces the cathode foil 32. Hence, the cathode composite material 22 is in direct contact with the ceramic layers 46 of the separator foils 41, 42. The width of the welding areas 65 is about 500 µm.

The electrode tape 50 is then cut to electrode sub-stacks 52. A semi transparent view at an electrode sub-stack 52, which is not comprised by the present invention, is given in figure 7. An anode tap 25 protrudes from the anode current collector 23. A cathode tap 26 protrudes from the cathode current collector 24. The anode tap 25 and the cathode tap 26 protrude into the same direction. Afterwards, a plurality of electrode sub-stacks 52 are placed on top of each other as to form an electrode assembly 10 shaped as an electrode stack. The anode taps 25 protruding from the anode current collectors 23 are connected electrically with each other. The cathode taps 26 protruding from the cathode current collectors 24 are also connected electrically with each other. When the electrode assembly 10 is inserted into the battery cell 2, the anode taps 25 are connected to the negative terminal 15 and the cathode taps 26 are connected to the positive terminal 16.

The foregoing description, for purpose of explanation, has been described with reference to specific embodiments. However, the illustrative discussions above are not intended to be exhaustive or to limit the invention to the precise forms disclosed. The invention is defined by the attached claims.

## Claims

1. Method for producing an electrode assembly (10) for a battery cell (2), whereat an anode foil (31) is provided,
a first separator foil (41) is placed on the anode foil (31),
the first separator foil (41) is welded to the anode foil (31) by dint of a laser beam (80),
a cathode foil (32) is placed on the first separator foil (41) and
a second separator foil (42) is placed on the cathode foil (32), whereat
the first separator foil (41) is pressed against the anode foil (31) while the first separator foil (41) is welded to the anode foil (31) by dint of the laser beam (80);
**characterized in that**
the first separator foil (41) is pressed against the anode foil (31) by dint of a tubular member (90) that is made of a material which is transparent for the laser beam (80) and rotates about a central axis (94); and
at least one laser source (82) that emits the laser beam (80) is placed inside the tubular member (90).

2. Method according to claim 1, whereat
the laser beam (80) is directed onto the first separator foil (41) such that energy of the laser beam (80) penetrates the first separator foil (41) and
such that an anode composite material (21) of the anode foil (31) largely absorbs the energy of the laser beam (80).

3. Method according to claim 2, whereat
the anode composite material (21) contains graphite.

4. Method according to one of claims 2 to 3, whereat
the first separator foil (41) contains a polymer layer (45) that is placed facing the anode foil (31).

5. Method according to claim 4, whereat
the energy of the laser beam (80) is applied such that the anode composite material (21) is heated to a temperature below a melting point or below a decomposition temperature of the anode composite material (21) and
above or near to a melting point or a softening point of the polymer layer (45).

6. Method according to one of the preceding claims, whereat
the first separator foil (41) contains a ceramic layer (46) that is placed averted from the anode foil (31).

7. Method according to one of the preceding claims, whereat
the second separator foil (42) is joined to the cathode foil (32) and/or to the first separator foil (41).

8. Method according to one of the preceding claims, whereat
the anode foil (31), the first separator foil (41), the cathode foil (32) and the second separator foil (42) are merged as to form an electrode tape (50) and whereat
the electrode tape (50) is cut to electrode sub-stacks (52).

9. Method according to claim 8, whereat
a plurality of electrode sub-stacks (52) are placed on top of each other as to form an electrode assembly (10) as an electrode stack.

## Patentansprüche

1. Verfahren zum Herstellen einer Elektrodenanordnung (10) für eine Batteriezelle (2), wobei
eine Anodenfolie (31) bereitgestellt wird,
eine erste Trennfolie (41) auf der Anodenfolie (31) angeordnet wird,
die erste Trennfolie (41) mittels eines Laserstrahls (80) mit der Anodenfolie (31) verschweißt wird,
eine Kathodenfolie (32) auf der ersten Trennfolie (41) angeordnet wird und eine zweite Trennfolie (42) auf der Kathodenfolie (32) angeordnet wird, wobei
die erste Trennfolie (41) gegen die Anodenfolie (31) gedrückt wird, während die erste Trennfolie (41) durch den Laserstrahl (80) mit der Anodenfolie (31) verschweißt wird;
**dadurch gekennzeichnet, dass**
die erste Trennfolie (41) mittels eines rohrförmigen Elements (90), das aus einem für den Laserstrahl (80) transparenten Material hergestellt ist und um eine Mittelachse (94) rotiert, gegen die Anodenfolie (31) gedrückt wird; und
mindestens eine Laserquelle (82), die den Laserstrahl (80) aussendet, im Inneren des rohrförmigen Elements (90) angeordnet ist.

2. Verfahren nach Anspruch 1, wobei
der Laserstrahl (80) auf die erste Trennfolie (41) gerichtet wird,
dergestalt, dass Energie des Laserstrahls (80) die erste Trennfolie (41) durchdringt, und
dergestalt, dass ein Anodenverbundmaterial (21) der Anodenfolie (31) die Energie des Laserstrahls (80) größtenteils absorbiert.

3. Verfahren nach Anspruch 2, wobei
das Anodenverbundmaterial (21) Graphit umfasst.

4. Verfahren nach einem der Ansprüche 2 und 3, wobei
die erste Trennfolie (41) eine Polymerschicht (45) umfasst, die der Anodenfolie (31) zugewandt angeordnet ist.

5. Verfahren nach Anspruch 4, wobei
die Energie des Laserstrahls (80) so angelegt wird, dass das Anodenverbundmaterial (21) auf eine Temperatur unterhalb eines Schmelzpunktes oder unterhalb einer Zersetzungstemperatur des Anodenverbundmaterials (21) und oberhalb oder in die Nähe eines Schmelzpunktes oder eines Erweichungspunktes der Polymerschicht (45) erwärmt wird.

6. Verfahren nach einem der vorangehenden Ansprüche, wobei die erste Trennfolie (41) eine Keramikschicht (46) umfasst, die von der Anodenfolie (31) abgewandt angeordnet ist.

7. Verfahren nach einem der vorangehenden Ansprüche, wobei die zweite Trennfolie (42) mit der Kathodenfolie (32) und/oder mit der ersten Trennfolie (41) verbunden ist.

8. Verfahren nach einem der vorangehenden Ansprüche, wobei die Anodenfolie (31), die erste Trennfolie (41), die Kathodenfolie (32) und die zweite Trennfolie (42) fusioniert werden, um ein Elektrodenband (50) zu bilden, und wobei
das Elektrodenband (50) in Elektroden-Teilstapel (52) zerschnitten wird.

9. Verfahren nach Anspruch 8, wobei
mehrere Elektroden-Teilstapel (52) übereinander angeordnet werden, um eine Elektrodenanordnung (10) als einen Elektrodenstapel zu bilden.

## Revendications

1. Procédé de production d'un ensemble d'électrodes (10) pour élément de batterie (2), dans lequel est mise en place une feuille d'anode (31),
une première feuille de séparateur (41) est placée sur la feuille d'anode (31), la première feuille de
séparateur (41) est soudée à la feuille d'anode (31) au moyen d'un faisceau laser (80),
une feuille de cathode (32) est placée sur la première feuille de séparateur (41) et une seconde feuille de séparateur (42) est placée sur la feuille de cathode (32), dans lequel :
la première feuille de séparateur (41) est pressée contre la feuille d'anode (31) tandis que la première feuille de séparateur (41) est soudée à la feuille d'anode (31) au moyen du faisceau laser (80) ;
**caractérisé en ce que** :
la première feuille de séparateur (41) est pressée contre la feuille d'anode (31) au moyen d'un élément tubulaire (90) qui est constitué d'un matériau qui est transparent au faisceau laser (80) et qui tourne autour d'un axe central (94) ; et
au moins une source laser (82) qui émet le faisceau laser (80) est placée à l'intérieur de l'élément tubulaire (90).

2. Procédé selon la revendication 1, dans lequel :
le faisceau laser (80) est dirigé sur la première feuille de séparateur (41),
de manière que l'énergie du faisceau laser (80) pénètre la première feuille de séparateur (41), et
de manière qu'un matériau composite d'anode (21) de la feuille d'anode (31) absorbe en grande partie l'énergie du faisceau laser (80).

3. Procédé selon la revendication 2, dans lequel :
le matériau composite d'anode (21) contient du graphite.

4. Procédé selon l'une des revendications 2 et 3, dans lequel :
la première feuille de séparateur (41) contient une couche de polymère (45) qui est placée en regard de la feuille d'anode (31).

5. Procédé selon la revendication 4, dans lequel :
l'énergie du faisceau laser (80) est appliquée de manière que le matériau composite d'anode (21) soit porté à une température inférieure à un point de fusion ou inférieure à une température de décomposition du matériau composite d'anode (21) et supérieure à un point de fusion ou à un point ramollissement de la couche de polymère (45) ou
proche du point de fusion ou du point de ramollissement de celle-ci.

6. Procédé selon l'une des revendications précédentes, dans lequel :
la première feuille de séparateur (41) contient une couche de céramique (46) qui est placée à l'opposé de la feuille d'anode (31).

7. Procédé selon l'une des revendications précédentes, dans lequel :
la seconde feuille de séparateur (42) est assemblée à la feuille de cathode (32) et/ou à la première feuille de séparateur (41).

8. Procédé selon l'une des revendications précédentes, dans lequel :
la feuille d'anode (31), la première feuille de séparateur (41), la feuille de cathode (32) et la seconde feuille de séparateur (42) sont fusionnées pour former une électrode ruban (50) et dans lequel :
l'électrode ruban (50) est découpée en sous-empilements d'électrodes (52).

9. Procédé selon la revendication 8, dans lequel :
les sous-empilements d'une pluralité de sous-empilements d'électrodes (52) sont placés les uns au-dessus des autres de manière à former un ensemble d'électrodes (10) sous la forme d'un empilement d'électrodes.
